# FASCICULE DE BREVET EUROPEEN

(11) **EP 2 945 819 B1**
(45) Date de publication et mention de la délivrance du brevet: **22.03.2017**
(21) Numéro de dépôt: 14703130.6
(22) Date de dépôt: 10.01.2014
(51) Int. Cl.: B60N 2/48

(54) **APPUI-TÊTE DE SIÈGE DE VÉHICULE AUTOMOBILE**
KOPFSTÜTZE FÜR KRAFTFAHRZEUGSITZ
HEADREST FOR MOTOR VEHICLE SEAT

(30) Priorité: 17.01.2013 FR 1350412
(43) Date de publication de la demande: 25.11.2015
(73) Titulaire: Cera TSC, 75008 Paris (FR)
(72) Inventeur: GEORGES, Laurent, F-08190 Roizy (FR); DELUS, Christian, F-51380 Verzy (FR); AIRAULT, Jean-Yves, F-56430 Concoret (FR)
(74) Mandataire: Sayettat, Julien Christian
(86) Numéro de dépôt international: PCT/FR2014/050042
(87) Numéro de publication internationale: WO 2014/111645

(56) Documents cités:
- FR-A1- 2 814 122
- FR-A1- 2 957 314
- US-A1- 2007 152 487

## Description

L'invention concerne un appui-tête de siège de véhicule automobile.

Il est connu, notamment du document FR-2 814 122 A1, de réaliser un appui-tête de siège de véhicule automobile, ledit appui-tête comprenant :
- deux tiges métalliques latérales de montage sur un dossier dudit siège,
- un coussin d'appui-tête,
- une structure de support dudit coussin, lesdites tiges étant montées en rotation selon un axe transversal sur ladite structure de sorte que ladite structure puisse pivoter vers l'avant pour passer d'une position d'utilisation à une position rabattue vers l'avant,
ladite structure étant pourvue d'un verrou de blocage en position d'utilisation, ledit verrou étant désactivé par déplacement transversal de ladite structure par rapport auxdites tiges.

Un tel agencement permet de réaliser un rabattement en rotation de l'appui-tête vers l'avant, ce qui permet de dégager la visibilité vers l'arrière pour le conducteur du véhicule quand le siège est inoccupé.

Un des intérêts d'une telle position rabattue est aussi de constituer une gêne pour le passager qui est incité à le remettre en position d'utilisation permettant d'assurer sa sécurité optimale.

Selon l'agencement prévu dans l'état de la technique cité, il existe un risque que, en cas de choc latéral, la structure passe de sa position d'utilisation à sa position rabattue, correspondant à un escamotage de l'appui-tête, du fait d'un déplacement latéral de l'appui-tête sous l'effet de l'inertie liée à son poids, ce qui fait que l'occupant n'est plus en sécurité.

L'invention a pour but de pallier cet inconvénient en proposant un agencement assurant une sécurité optimale pour l'occupant.

Par ailleurs, un des modes de réalisation de l'agencement proposé permet de garantir une reproductibilité de la manoeuvre de déverrouillage malgré les dispersions dimensionnelles pouvant être observées d'un appui-tête à l'autre.

A cet effet, l'invention propose un appui-tête de siège de véhicule automobile, ledit appui-tête comprenant :
- deux tiges métalliques latérales de montage sur un dossier dudit siège, une desdites tiges étant pourvue sur son extrémité haute d'une embase de verrouillage,
- un coussin d'appui-tête,
- une structure de support dudit coussin, lesdites tiges étant montées en rotation selon un axe transversal sur ladite structure de sorte que ladite structure puisse pivoter vers l'avant pour passer d'une position d'utilisation à une position rabattue vers l'avant,
ladite structure étant pourvue des composants suivants :
- un verrou monté coulissant verticalement pour pouvoir se mettre en configuration de verrouillage où il coopère avec ladite embase pour bloquer ladite structure en position d'utilisation,
- un levier d'actionnement dudit verrou en déverrouillage, ledit levier comprenant une première et une deuxième zone extrême, ledit levier étant monté pivotant autour d'un axe longitudinal disposé entre lesdites zones pour prendre appui sur ledit verrou par ladite deuxième zone,
- une réglette, montée coulissante transversalement, d'actionnement dudit levier en déverrouillage, ladite réglette comprenant une première et une deuxième extrémité, ladite réglette prenant appui par ladite première extrémité sur ladite première zone,
- un bouton de déverrouillage activé par pression, monté coulissant transversalement, ledit bouton prenant appui sur ladite deuxième extrémité,
- un premier moyen ressort d'actionnement dudit levier en appui contre ladite réglette,
- un deuxième moyen ressort d'actionnement dudit verrou vers sa configuration de verrouillage.

Dans cette description, les termes de positionnement dans l'espace (longitudinal, transversal, latéral, avant, arrière, vertical,...) sont pris en référence à l'appui-tête disposé dans le véhicule en situation d'utilisation.

Avec l'agencement proposé, le risque que, en cas de choc latéral, la structure passe de sa position d'utilisation à sa position rabattue, sous l'effet de l'inertie liée au poids de l'appui-tête, est inexistant puisque le déverrouillage ne se fait pas par un déplacement transversal de ladite structure par rapport aux tiges.

D'autres particularités et avantages de l'invention apparaîtront dans la description qui suit, faite en référence aux figures jointes, dans lesquelles :

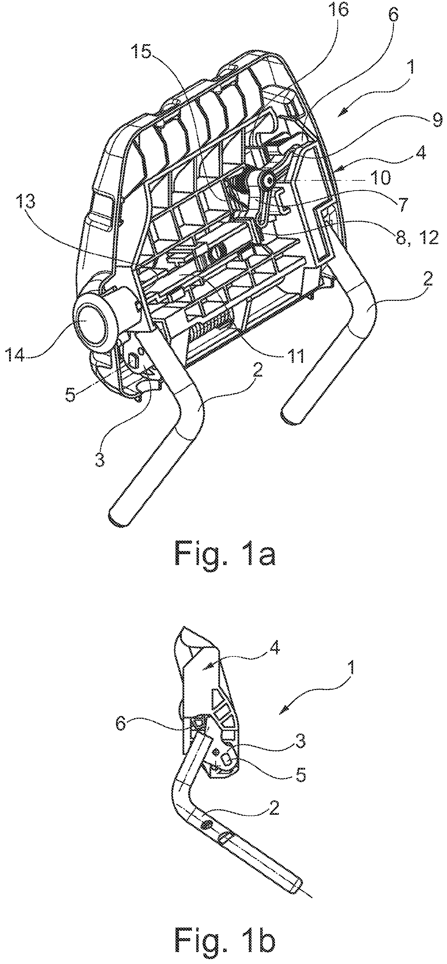

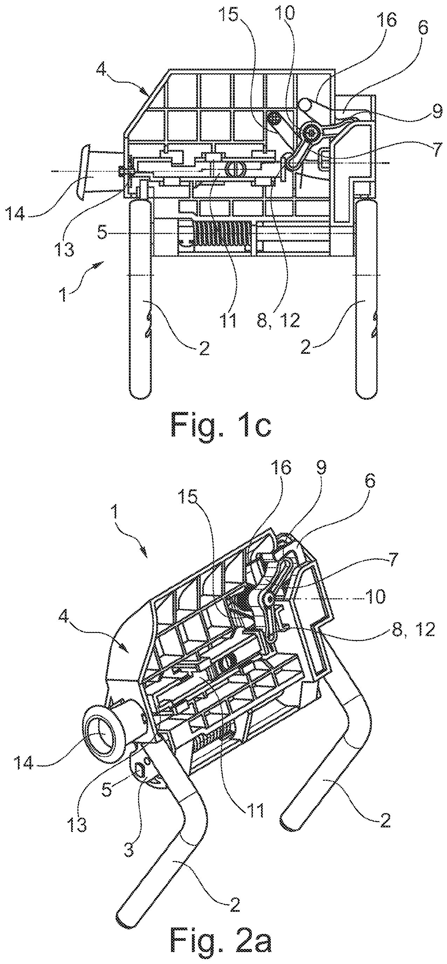

- les figures 1 sont des vues partielles d'un appui-tête selon un mode de réalisation, le verrou étant en configuration de verrouillage, selon des vues en perspective (1a), latérale (1b) et de face (1c),

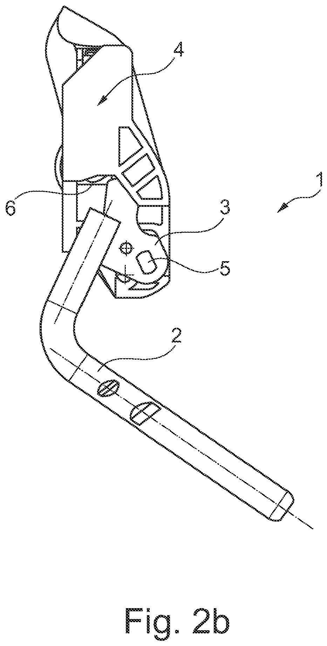

- les figures 2 sont des vues de la réalisation des figures 1, le verrou étant en configuration de déverrouillage, selon des vues en perspective (2a) et latérale (2b),
- les figures 3 sont des vues de détail de la réglette utilisée dans le mode de réalisation des figures précédentes, ladite réglette étant représentée en perspective éclatée (3a) et en coupe axiale avec la pièce de rattrapage de jeu bloquée en coulissement par le moyen de blocage (3b).

En référence aux figures, on décrit un appui-tête 1 de siège de véhicule automobile, ledit appui-tête comprenant :
- deux tiges 2 métalliques latérales de montage sur un dossier dudit siège, une desdites tiges étant pourvue sur son extrémité haute d'une embase 3 de verrouillage, notamment soudée,
- un coussin d'appui-tête, non représenté,
- une structure 4 de support dudit coussin, lesdites tiges étant montées en rotation selon un axe transversal 5 sur ladite structure de sorte que ladite structure puisse pivoter vers l'avant pour passer d'une position d'utilisation à une position rabattue vers l'avant,
ladite structure étant pourvue des composants suivants :
- un verrou 6 monté coulissant verticalement pour pouvoir se mettre en configuration de verrouillage où il coopère avec ladite embase pour bloquer ladite structure en position d'utilisation,
- un levier 7 d'actionnement dudit verrou en déverrouillage, ledit levier comprenant une première 8 et une deuxième 9 zone extrême, ledit levier étant monté pivotant autour d'un axe longitudinal 10 disposé entre lesdites zones pour prendre appui sur ledit verrou par ladite deuxième zone,
- une réglette 11, montée coulissante transversalement, d'actionnement dudit levier en déverrouillage, ladite réglette comprenant une première 12 et une deuxième 13 extrémité, ladite réglette prenant appui par ladite première extrémité sur ladite première zone,
- un bouton 14 de déverrouillage activé par pression, monté coulissant transversalement, ledit bouton prenant appui sur ladite deuxième extrémité,
- un premier moyen ressort 15 d'actionnement dudit levier en appui contre ladite réglette,
- un deuxième moyen ressort 16 d'actionnement dudit verrou vers sa configuration de verrouillage.

Selon la réalisation représentée, les premier 15 et deuxième 16 moyens ressort sont des parties d'un fil en métal à ressort monobloc.

De façon non représentée, l'appui-tête 1 peut comprendre en outre un ressort annexe d'actionnement du bouton 14 en configuration inactive.

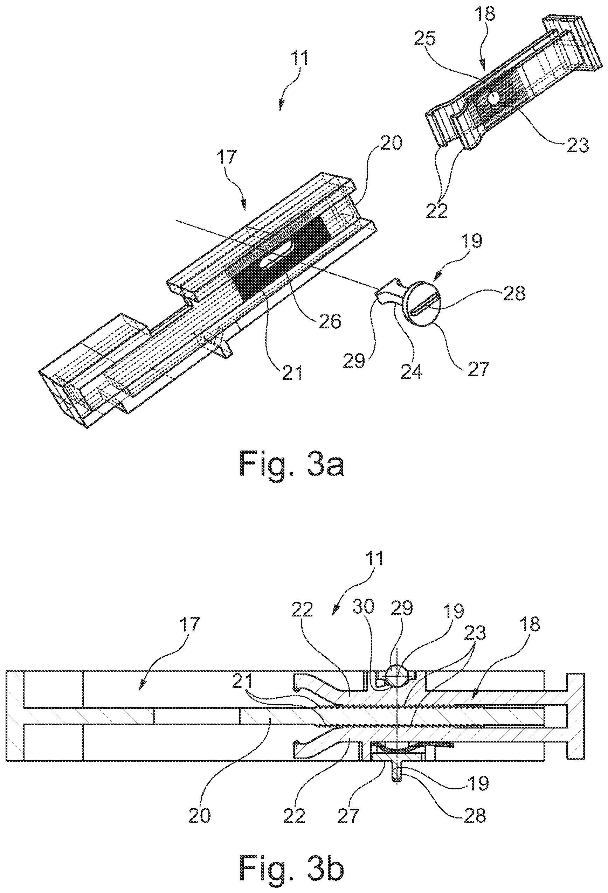

Selon la réalisation représentée, et détaillée en figures 3, la réglette 11 comprend :
- un corps 17 principal,
- une pièce de rattrapage de jeu 18 montée coulissante transversalement sur ledit corps,
- un moyen de blocage 19 du coulissement de ladite pièce.

Lors de la fabrication de l'appui-tête 1, l'opérateur déploie la réglette 11 depuis une configuration rétractée pour venir mettre ses extrémités 12,13 sensiblement en contact avec le levier 7 et le bouton 14.

Ce mode de réalisation permet de garantir une reproductibilité de la manoeuvre de déverrouillage - à savoir un enfoncement du bouton 14 selon une cote prédéfinie, par exemple de 10 mm, et un effort d'enfoncement inférieur à un seuil limite, par exemple de 50 N -, ceci malgré les dispersions dimensionnelles pouvant être observées d'un appui-tête 1 à l'autre, la possibilité d'adapter la longueur de la réglette 11 permettant de compenser lesdites dispersions.

Selon la réalisation représentée :
- le corps 17 comprend une partie en forme de plaquette 20 allongée transversalement, les deux faces de ladite plaquette étant pourvues d'une crémaillère 21 respective.
- la pièce de rattrapage 18 comprend deux branches 22 parallèles reliées entre elles par une extrémité respective de manière à présenter une forme d'épingle recevant ladite plaquette, lesdits branches étant chacune pourvue d'une crémaillère réciproque engrenant chacune avec une desdites crémaillères,
- le moyen de blocage 19 du coulissement est sous forme d'une tige 24 traversant lesdites branches par deux orifices 25 prévus respectivement sur chacune d'elle et traversant ledit corps par un trou en oblong 26 s'étendant transversalement, ladite tige étant pourvue sur une de ses extrémités d'une collerette 27 conformée pour pouvoir être actionnée en rotation - ici de par la présence d'une saillie 28 de préhension - et sur son autre extrémité d'un bâtonnet 29 saillant radialement de part et d'autre de ladite tige,
ladite pièce de rattrapage comprenant une surface de came 30 agencée pour coopérer avec ledit bâtonnet et réaliser un enserrement de ladite plaquette par lesdites branches lorsque ladite collerette est actionnée en rotation vers une position angulaire de blocage.

## Revendications

1. Appui-tête (1) de siège de véhicule automobile, ledit appui-tête comprenant :
• deux tiges (2) métalliques latérales de montage sur un dossier dudit siège, une desdites tiges étant pourvue sur son extrémité haute d'une embase (3) de verrouillage,
• un coussin d'appui-tête,
• une structure (4) de support dudit coussin, lesdites tiges étant montées en rotation selon un axe transversal (5) sur ladite structure de sorte que ladite structure puisse pivoter vers l'avant pour passer d'une position d'utilisation à une position rabattue vers l'avant,
ladite structure étant pourvue des composants suivants :
• un verrou (6) monté coulissant verticalement pour pouvoir se mettre en configuration de verrouillage où il coopère avec ladite embase pour bloquer ladite structure en position d'utilisation,
• un levier (7) d'actionnement dudit verrou en déverrouillage, ledit levier comprenant une première (8) et une deuxième (9) zone extrême, ledit levier étant monté pivotant autour d'un axe longitudinal (10) disposé entre lesdites zones pour prendre appui sur ledit verrou par ladite deuxième zone,
• une réglette (11), montée coulissante transversalement, d'actionnement dudit levier en déverrouillage, ladite réglette comprenant une première (12) et une deuxième (13) extrémité, ladite réglette prenant appui par ladite première extrémité sur ladite première zone,
• un bouton (14) de déverrouillage activé par pression, monté coulissant transversalement, ledit bouton prenant appui sur ladite deuxième extrémité,
• un premier moyen ressort (15) d'actionnement dudit levier en appui contre ladite réglette,
• un deuxième moyen ressort (16) d'actionnement dudit verrou vers sa configuration de verrouillage.

2. Appui-tête selon la revendication 1, **caractérisé en ce que** les premier (15) et deuxième (16) moyens ressort sont des parties d'un fil en métal à ressort monobloc.

3. Appui-tête selon la revendication 1 ou 2, **caractérisé en ce qu'**il comprend en outre un ressort annexe d'actionnement du bouton (14) en configuration inactive.

4. Appui-tête selon l'une quelconque des revendications 1 à 3, **caractérisé en ce que** la réglette (11) comprend :
• un corps (17) principal,
• une pièce de rattrapage de jeu (18) montée coulissante transversalement sur ledit corps,
• un moyen de blocage (19) du coulissement de ladite pièce.

5. Appui-tête selon la revendication 4, **caractérisé en ce que** :
• le corps (17) comprend une partie en forme de plaquette (20) allongée transversalement, les deux faces de ladite plaquette étant pourvues d'une crémaillère (21) respective.
• la pièce de rattrapage (18) comprend deux branches (22) parallèles reliées entre elles par une extrémité respective de manière à présenter une forme d'épingle recevant ladite plaquette, lesdites branches étant chacune pourvue d'une crémaillère réciproque (23) engrenant chacune avec une desdites crémaillères,
• le moyen de blocage du coulissement est sous forme d'une tige (24) traversant lesdites branches par deux orifices (25) prévus respectivement sur chacune d'elle et traversant ledit corps par un trou en oblong (26) s'étendant transversalement, ladite tige étant pourvue sur une de ses extrémités d'une collerette (27) conformée pour pouvoir être actionnée en rotation et sur son autre extrémité d'un bâtonnet (29) saillant radialement de part et d'autre de ladite tige,
ladite pièce de rattrapage comprenant une surface de came (30) agencée pour coopérer avec ledit bâtonnet et réaliser un enserrement de ladite plaquette par lesdites branches lorsque ladite collerette est actionnée en rotation vers une position angulaire de blocage.

## Patentansprüche

1. Kopfstütze (1) für einen Fahrzeugsitz, wobei die besagte Kopfstütze Folgendes umfasst:
- zwei seitliche Metallstangen (2) für die Montage auf einer Rückenlehne des besagten Sitzes, wobei eine der besagten Stangen an ihrem oberen Ende mit einer Verriegelungsbasis (3) versehen ist,
- ein Kopfstützpolster,
- eine Tragstruktur (4) des besagten Polsters, wobei die besagten Stangen um eine Querachse (5) drehbar an der besagten Struktur montiert sind, so dass die besagte Struktur nach vorne schwenken kann, um von einer Gebrauchsstellung in eine nach vorne geklappte Stellung zu gelangen,
wobei die besagte Struktur mit den folgenden Komponenten versehen ist:
- einem Riegel (6), der vertikal verschiebbar montiert ist, um sich in eine Verriegelungsstellung begeben zu können, in der er mit der besagten Basis zusammenwirkt, um die besagte Struktur in der Gebrauchsposition zu blockieren,
- einem Hebel (7) zum Betätigen des besagten Riegels in die Entriegelung, wobei der besagte Hebel einen ersten (8) und einen zweiten Endbereich (9) umfasst, wobei der besagte Hebel um eine zwischen den besagten Bereichen angeordnete Längsachse (10) schwenkbar montiert ist, um mit dem besagten zweiten Bereich auf den besagten Riegel zu drücken,
- einer Leiste (11), die quer verschiebbar montiert ist, zum Betätigen des besagten Hebels in die Entriegelung, wobei die besagte Leiste ein erstes (12) und ein zweites Ende (13) umfasst, wobei die besagte Leiste mit dem besagten ersten Ende auf den besagten ersten Bereich drückt,
- einer durch Drücken betätigten Entriegelungstaste (14), die quer verschiebbar montiert ist, wobei die besagte Taste auf das besagte zweite Ende drückt,
- einem ersten Federmittel (15) zum Betätigen des besagten Hebels, das gegen die besagte Leiste drückt,
- einem zweiten Federmittel (16) zum Betätigen des besagten Riegels in seine Verriegelungsstellung.

2. Kopfstütze nach Anspruch 1, **dadurch gekennzeichnet, dass** das erste (15) und das zweite Federmittel (16) Teile eines Metalldrahts mit einstückiger Feder sind.

3. Kopfstütze nach Anspruch 1 oder 2, **dadurch gekennzeichnet, dass** sie des Weiteren eine Nebenfeder zum Betätigen der Taste (14) in eine inaktive Stellung umfasst.

4. Kopfstütze nach einem der Ansprüche 1 bis 3, **dadurch gekennzeichnet, dass** die Leiste (11) Folgendes umfasst:
- einen Hauptkörper (17),
- ein Spielnachstellteil (18), das quer verschiebbar auf dem besagten Körper montiert ist,
- ein Mittel zum Blockieren (19) der Verschiebebewegung des besagten Teils.

5. Kopfstütze nach Anspruch 4, **dadurch gekennzeichnet, dass**:
- der Körper (17) einen sich quer erstreckenden plattenförmigen Abschnitt (20) umfasst, wobei die beiden Flächen der besagten Platte jeweils mit einer Zahnstange (21) versehen sind,
- das Nachstellteil (18) zwei parallele Arme (22) umfasst, die über ein jeweiliges Ende derart miteinander verbunden sind, dass sie eine Haarnadelform aufweisen, welche die besagte Platte aufnimmt, wobei jeder der besagten Arme mit einer gegenseitigen Zahnstange (23) versehen ist, von denen jede in eine der besagten Zahnstangen eingreift,
- das Mittel zum Blockieren der Verschiebebewegung die Form einer Stange (24) besitzt, die durch zwei Öffnungen (25), die jeweils in jedem von ihnen vorgesehen sind, durch die besagten Arme läuft, und durch ein sich quer erstreckendes Langloch (26) durch den besagten Körper läuft, wobei die besagte Stange an einem ihrer Enden mit einem Kragen (27) versehen ist, der dazu ausgebildet ist, drehend betätigt werden zu können, und an ihrem anderen Ende mit einem Stift (29), der radial aus beiden Seiten der besagten Stange herausragt,
wobei das besagte Nachstellteil eine Nockenfläche (30) umfasst, die dazu beschaffen ist, mit dem besagten Stift zusammenzuwirken und ein Einklemmen der besagten Platte durch die besagten Arme zu bewirken, wenn der besagte Kragen drehend in eine gewinkelte Blockierstellung betätigt wird.

## Claims

1. Headrest for motor vehicle seat (1), said headrest comprising:
- two lateral metal rods (2) for mounting on the backrest of said seat, one of said rods being provided with a locking base (3) at its top end,
- a headrest cushion,
- a structure (4) supporting said cushion, said rods being mounted for rotation on a transverse axis (5) on said structure so that said structure can pivot forwards in order to pass from a position of use to a position folded forwards,
said structure being provided with the following components:
- a bolt (6) mounted so as to slide vertically in order to be able to go into a locking configuration in which it cooperates with said base in order to lock said structure in the position of use,
- a lever (7) for actuating said bolt for unlocking, said lever comprising a first (8) and second (9) end zone, said lever being mounted so as to pivot about a longitudinal axis (10) disposed between said zones in order to bear on said bolt through said second zone,
- a strip (11), mounted so as to slide transversely, for actuating said lever for unlocking, said strip comprising a first (12) and second (13) end, said strip bearing on said first zone through said first end,
- an unlocking knob (14) activated by pressure, mounting so as to slide transversely, said knob bearing on said second end,
- a first spring means (15) for actuating said lever in abutment against said strip,
- a second spring means (16) for actuating said bolt towards its locking configuration.

2. Headrest according to claim 1, **characterised in that** the first (15) and second (16) spring means are parts of a metal wire with a single-piece spring.

3. Headrest according to claim 1 or claim 2, **characterised in that** it further comprises an accessory spring for actuating the knob (14) in the inactive configuration.

4. Headrest according to any of claims 1 to 3, **characterised in that** the strip (11) comprises:
- a main body (17),
- a part (18) for taking up clearance, mounted so as to slide transversely on said body,
- a means (19) for locking the sliding of said part.

5. Headrest according to claim 4, **characterised in that**:
- the body (17) comprises a portion in the form of a transversely elongate plate (20), the two faces of said plate being provided with a respective rack (21),
- the taking-up part (18) comprises two parallel arms (22) connected together by a respective end so as to have the form of a hairpin receiving said plate, said arms each being provided with a reciprocal rack (23) each meshing with one of said racks,
- the means for locking the sliding is in the form of a rod (24) passing through said arms through two orifices (25) provided respectively on each of them and passing through said body through an oblong hole (26) extending transversely, said rod being provided on one of its ends with a collar (27) conformed so as to be able to be actuated in rotation and on its other end with a stick (29) projecting radially on either side of said rod,
said take-up part comprising a cam surface (30) arranged so as to cooperate with said stick and to implement a gripping of said plate by said arms when said collar is actuated in rotation towards an angular locking position.
